Europäisches Patentamt

**European Patent Office**

**Office européen des brevets**

(19)

(11) Veröffentlichungsnummer: **0 095 548**
A2

(12) # EUROPÄISCHE PATENTANMELDUNG

(21) Anmeldenummer: 83100154.0

(22) Anmeldetag: 11.01.83

(51) Int. Cl.³: **B 60 R 9/10**

(30) Priorität: **29.05.82 DE 3220476**

(43) Veröffentlichungstag der Anmeldung: **07.12.83**
**Patentblatt 83/49**

(84) Benannte Vertragsstaaten: **AT BE CH FR GB IT LI LU NL SE**

(71) Anmelder: **VEREINIGTE ALUMINIUM-WERKE AKTIENGESELLSCHAFT,**
**Georg-von-Boeselager-Strasse 25, D-5300 Bonn 1 (DE)**

(72) Erfinder: **Stein, Bernd, An der Düne 25,**
**D-5300 Bonn 1 (DE)**

(74) Vertreter: **Müller-Wolff, Thomas, Dipl.-Ing., c/o**
**Vereinigte Aluminium-Werke AG Patentabteilung**
**Postfach 2468, D-5300 Bonn 1 (DE)**

(54) **Befestigungsvorrichtung für Zweiräder.**

(57) Es soll eine Befestigungsvorrichtung für Zweiräder geschaffen werden, die ein sicheres Abstellen auf engstem Rau, insbesondere auf Transportanhängern, ermöglicht und beim Ein- und Ausschieben der Zweiräder mögliche Beschädigungen an den Vorderrädern vermeidet. Diese Aufgabe wird erreicht durch eine Basis (1), an die Lenkergreifarme (2) und ein Übergreifbügel (3) angeordnet sind. Der Übergreifbügel (3) ist drehbar an der Basis (1) befestigt und ist im arretierten Zustand zwischen die Lenkergreifarme (2) geschwenkt und gibt im geöffneten Zustand die U-förmigen Lenkergreifarme frei.

EP 0 095 548 A2

## Befestigungsvorrichtung für Zweiräder

Die Erfindung betrifft eine Befestigungsvorrichtung für Zweiräder, die ein sicheres Abstellen, insbesondere auf Transportanhängern ermöglicht.

Es sind Befestigungsvorrichtungen für Zweiräder bekannt, die aus Bügeln oder Rinnen bestehen, in die das Vorderrad eingeschoben werden kann. Bei dieser Art des Abstellens besteht die Gefahr des Umkippens des Zweirades, da die bewegliche Anbringung des Vorderrades ein seitliches Versetzen des hinteren Teiles des Zweirades ermöglicht, wodurch ein Kippmoment um die Längsachse entsteht. Ein Umsturz des Zweirades führt häufig zu erheblichen Beschädigungen des Vorderrades, da dieses in der Speichenebene nicht besonders stabil ausgebildet ist.

Die Gefahr des seitlichen Versetzens des Hinterteils des Zweirades tritt insbesondere dann auf, wenn bei einem mehrteiligen Fahrradständer neue Fahrräder in die engen Zwischenräume eingeschoben werden und dabei die abgestellten Räder beiseite gerückt werden. Die Umsturzgefahr wird zusätzlich vergrößert, wenn die Befestigungsvorrichtung ständigen Erschütterungen, wie beispielsweise auf Transportanhängern, ausgesetzt ist.

Aufgabe der vorliegenden Erfindung ist es daher, eine Befestigungsvorrichtung für Zweiräder zu schaffen, die ein sicheres Abstellen auf engstem Raum ermöglicht und die beim Ein- und Ausschieben der Zweiräder mögliche Beschädigung an den Vorderrädern vermeidet.

- 2 -

Erfindungsgemäß wird diese Aufgabe durch die in den Patentansprüchen angegebenen Merkmale gelöst. Es hat sich gezeigt, daß eine Befestigung am Lenkerkopf der Zweiräder ein sicheres und gleichzeitig schnell lösbares Abstellen ermöglicht. Die genannte Befestigungsvorrichtung ist auch für sehr unterschiedliche Lenkerhöhen geeignet und läßt sich überall leicht montieren, insbesondere auch an Transportanhängern mit mindestens einer feststehenden Frontwand.

Zum Schutz der Lenkeroberfläche sind die Übergreifbügel mit einem elastischen Werkstoff aus Kunststoff oder Gummiwerkstoff überzogen. Die Übergreifbügel können zwischen oder neben die Lenkergreifarme geschwenkt werden und der Andruck läßt sich ggfs. durch eine Feder erhöhen.

Im folgenden wird die Erfindung an Hand mehrerer Ausführungsbeispiele näher erläutert. Es zeigen:

Fig. 1 = 3 unterschiedliche Ausführungsformen der Befestigungsvorrichtung,

Fig. 2 = die Anbringung der erfindungsgemäßen Befestigungsvorrichtung an einem Transportwagen,

Fig. 3 = einen Transportwagen mit als Rampe verwendbarer seitlichen Klappe.

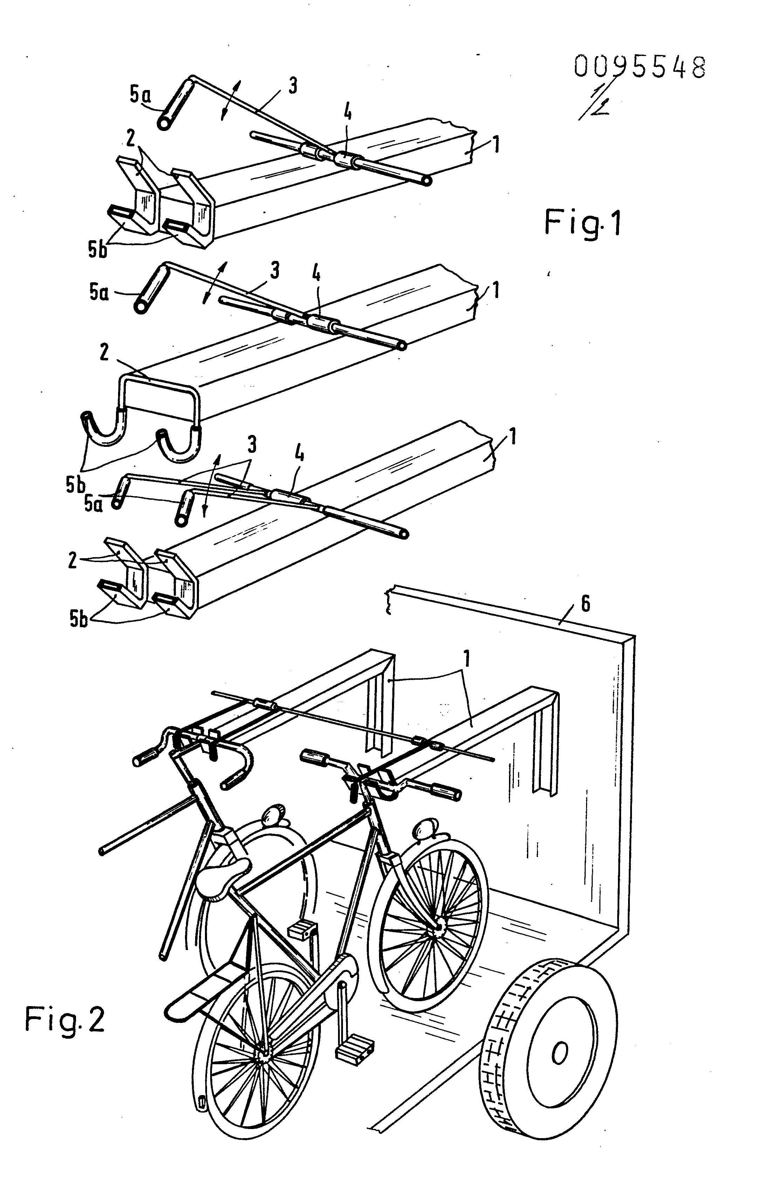

In Fig. 1 ist die Befestigungsbasis mit 1, der Lenkergreifarm mit 2 und der Übergreifbügel mit 3 bezeichnet. Der Übergreifbügel 3 ist an jeweils einem Gelenk 4 drehbar befestigt. Lenkergreifarm 2 und Übergreifbügel 3 sind an den zur Aufnahme des Lenkers vorgesehenen Stellen mit einem elastischen Überzug 5a,b versehen.

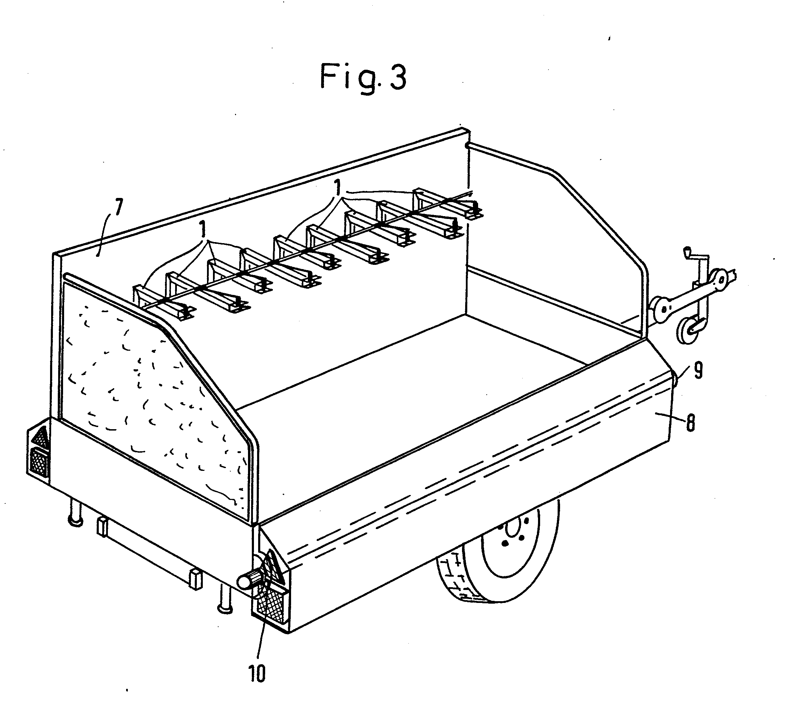

Aus Fig. 2 und Fig. 3 sind unterschiedliche Anbringungsarten der Befestigungsvorrichtung zu erkennen. Während in Fig. 2 die Basis 1 an der Stirnwand 6 angebracht ist, befinden sich die Befestigungsvorrichtungen nach Fig. 3 an einer Längswand 7. Dadurch lassen sich mehr Fahrräder auf einem Transportwagen unterbringen.

Aus Fig. 3 ist zusätzlich eine besonders vorteilhafte Ausführung des Transportwagens zu erkennen. Die seitliche Klappe 8 ist nämlich als Rampe verwendbar, wozu lediglich eine zusätzliche Welle 9 oder Scharniere mit entsprechenden Lagern 10 benötigt wird. Dadurch lassen sich auch schwere Zweiräder leicht in den Transportwagen einschieben.

0095548

Patentansprüche :

1. Befestigungsvorrichtung für Zweiräder, die ein sicheres Abstellen, insbesondere auf Transportanhängern ermöglicht, gekennzeichnet durch eine Basis (1), an die Lenkerarme (2) und ein Übergreifbügel (3) angeordnet sind, wobei im arretierten Zustand der Übergreifbügel zwischen die Lenkergreifarme geschwenkt ist.

2. Vorrichtung nach Anspruch 1, dadurch gekennzeichnet, daß die Lenkergreifarme und der Übergreifbügel mit einem Schutzüberzug aus Kunststoff versehen sind.

3. Vorrichtung nach einem der vorhergehenden Ansprüche, dadurch gekennzeichnet, daß der Übergreifbügel drehbar an der Basis (1) befestigt ist und im geöffneten Zustand die U-förmigen Lenkergreifarme freigibt.

0095548

Fig.1

Fig.2

# Fig. 3